# DEMANDE DE BREVET EUROPEEN

(11) **EP 1 731 948 A2**
(43) Date de publication de la demande: **13.12.2006**
(21) Numéro de dépôt: 06009932.2
(22) Date de dépôt: 15.05.2006
(51) Int. Cl.: G02C 11/02

(54) **Lunettes à parties constitutives interchangeables**

(30) Priorité: 08.06.2005 FR 0505977
(71) Demandeur: Tand'm S.a.r.l., 39800 Poligny (FR)
(72) Inventeur: Charmoille, Patricia, 25A Rue Proudhon 25000 Besancon (FR)
(74) Mandataire: Bentz, Jean-Paul

(57) **Abrégé**

Lunettes (1A) constituées par deux branches latérales (3), deux verres optiques à assembler entre eux et un élément de façade (6) de liaison, au moins deux parties constitutives (A, B) desdites lunettes (1A), comportant des moyens de fixation amovibles complémentaires (8) disposées d'une part sur l'une des parties (A) et d'autre part sur l'autre partie (B) des lunettes (1A), caractérisées en ce que les moyens de fixation complémentaires (8) sont constitués d'une part par un pion, réalisé perpendiculairement sur l'une des parties (B) apte à coopérer avec un logement (12), réalisé sur l'autre partie (A), intégrant des moyens de verrouillage (13) dudit pion, qui sont constitués par un organe élastiquement déformable rapporté transversalement dans le logement (12), pour donner à celui-ci une section de passage plus étroite que la section du pion.

## Description

La présente invention concerne des lunettes constituées par deux branches latérales et deux verres optiques, à assembler entre eux par l'intermédiaire d'un élément de façade, susceptible d'être agencé pour recevoir optionnellement un élément de transformation de l'aspect, au moins deux parties constitutives desdites lunettes, transformables ou non, comportant des moyens de fixation amovibles complémentaires disposés d'une part sur l'une des parties et d'autre part sur une autre partie.

Il a déjà été proposé, notamment par la demanderesse, de transformer l'aspect des lunettes en rapportant sur sa façade un élément de décor, la recouvrant, totalement ou partiellement, la liaison s'effectuant par au moins un moyen de fixation dont une partie est disposée sur l'élément de décor, et dont une autre partie est disposée sur la façade.

C'est ainsi qu'en disposant de plusieurs éléments de décor constituant une gamme, l'utilisateur peut modifier l'apparence de ses lunettes selon son choix.

Néanmoins, selon ce concept, l'élément de façade et les branches restent d'un aspect immuable, tout au moins au niveau des branches, qui sont visibles, mais également au niveau de la façade dans le cas où il s'agit d'un élément de décor à recouvrement partiel.

Si cela n'est pas forcément un inconvénient, on peut vouloir, dans un souci d'une plus grande diversification de l'aspect des lunettes, modifier également l'apparence des branches et de la façade.

Selon une première phase de la démarche inventive, et une première possibilité d'application, cela a été recherché et a conduit à séparer les fonctions, c'est-à-dire celle concernant la partie dite « optique » des lunettes, à savoir les verres, et celle concernant la partie dite « technique », à savoir la façade et les branches pouvant rendre ceux-ci interchangeables indépendamment de la partie optique.

Afin de pouvoir répondre aux deux cas de figures précités, mais également à d'autres, voire leurs combinaisons, l'invention concerne des lunettes constituées par deux branches latérales, deux verres optiques à assembler entre eux et un élément de façade de liaison, susceptible de recevoir optionnellement un élément de transformation de l'aspect, au moins deux parties constitutives desdites lunettes, transformables ou non, comportant des moyens de fixation amovibles complémentaires disposées d'une part sur l'une des parties et d'autre part sur l'autre partie des lunettes, caractérisées en ce que les moyens de fixation complémentaires sont constitués d'une part par un pion, comportant des moyens de retenue, réalisé perpendiculairement sur l'une des parties de formes et de dimensions le rendant apte à coopérer avec un logement, réalisé sur l'autre partie, ou inversement, intégrant des moyens de verrouillage dudit pion, qui sont constitués par un organe élastiquement déformable rapporté transversalement dans le logement, pour donner à celui-ci une section de passage plus étroite que la section du pion, mais déformable élastiquement lors de l'introduction de ce dernier, pour reprendre sa position initiale après introduction et coopérer en verrouillage avec les moyens de retenue dudit pion.

L'avantage d'un tel système réside dans le fait que l'interchangeabilité des parties, quelles qu'elles soient, pourra être effectuée par l'utilisateur lui-même, sans compétence professionnelle particulière, et surtout sans aucun outil.

Un autre avantage est la miniaturisation possible de ce système, complètement insoupçonnable, quand les parties sont en place.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 est une vue en perspective avant d'une paire de lunettes, selon un premier exemple d'application de l'invention, constituée par un premier sous-ensemble dit « optique » O, comprenant les verres, et un second sous-ensemble T dit « technique », comprenant au moins un élément de façade et les branches.
La figure 2 est une vue en perspective du sous-ensemble T dit « technique » selon la figure 1.
La figure 3 est une vue du sous-ensemble O dit « optique » selon la figure 1.
La figure 4 est une vue avant d'une paire de lunettes assortie d'un élément de transformation de son aspect, avant montage de celui-ci, selon une variante d'application.
La figure 5 est une vue avant d'une paire de lunette assortie d'un élément de transformation de son aspect, après montage de celui-ci.
La figure 6 représente, en coupe partielle, selon un exemple de réalisation, un pion solidaire d'un élément de transformation selon les figures 4 et 5, à titre d'illustration de l'invention.
La figure 7 représente, en coupe partielle, un élément de transformation équipé d'un pion selon la figure 6, mis en place sur un élément de façade des lunettes comportant des moyens de verrouillage du pion selon l'invention.
Les figures 8, 9 et 10 représentent deux parties de lunettes, quelles qu'elles soient, à assembler, respectivement avant assemblage, pendant l'assemblage, après l'assemblage, à l'aide des moyens de fixation amovibles complémentaires selon l'invention.
La figure 11 est une vue en coupe, selon la ligne XI-XI de la figure 8.
La figure 12 est une vue en coupe, selon la ligne XII-XII de la figure 9.

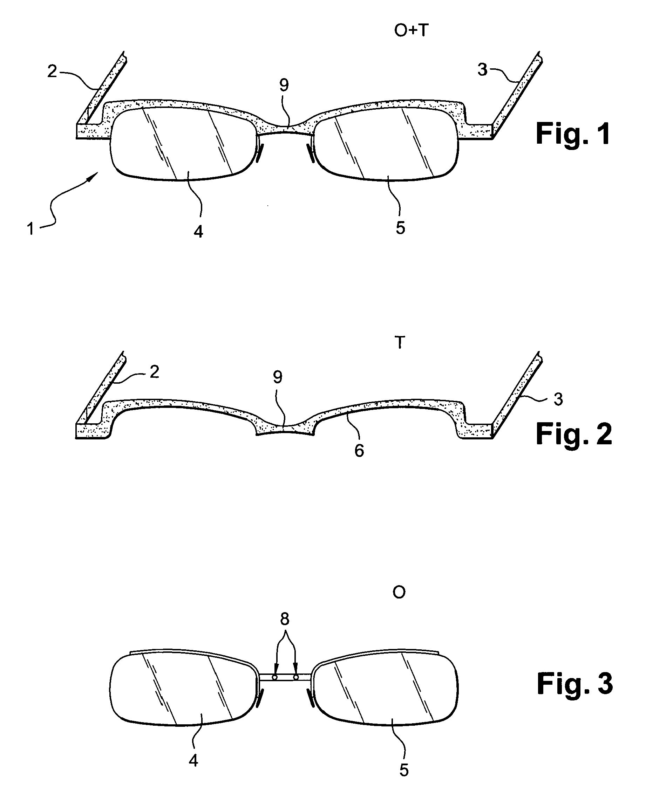

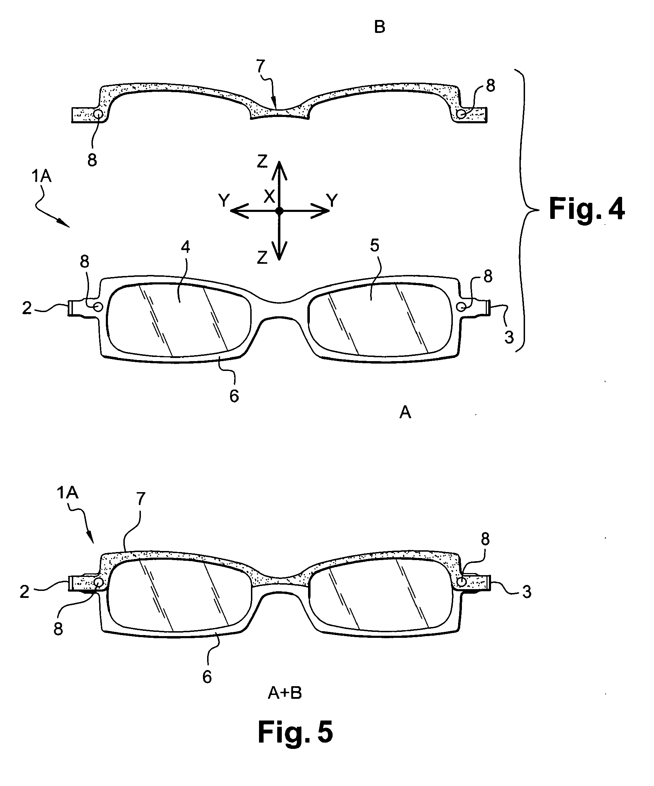

D'une manière générale, l'invention se rapporte à des lunettes 1 selon les figures 1, 2 et 3, ou 1A selon les figures 4, 5, 6 et 7. Dans un cas comme dans l'autre, les lunettes 1, 1A sont constituées de deux branches latérales 2, 3, de deux verres optiques 4, 5 à assembler entre eux et d'un élément de façade 6 de liaison, susceptible de recevoir optionnellement un élément 7 de transformation de l'aspect. Au moins deux parties constitutives O, T ou A, B desdites lunettes 1, 1A, transformables ou non, comportent des moyens de fixation amovibles complémentaires 8 disposés d'une part sur l'une des parties O ou A et d'autre part sur l'autre partie T ou B des lunettes 1, 1A.

Il est bien à noter que si seuls deux modes de réalisation ont été représentés, on verra par la suite que l'invention peut s'appliquer à tout type de lunettes constituées de quelques façons que ce soient, pourvu qu'il y ait deux parties à relier entre elles pour les constituer partiellement ou totalement.

C'est ainsi que, par exemple, l'invention peut se rapporter à des lunettes 1 formées par deux parties distinctes, l'une O dite « optique » comprenant les verres 4, 5 et constituant un premier sous-ensemble, l'autre T dite « technique » comprenant au moins un élément de façade 6 constituant avec les branches 2, 3 un second sous-ensemble, sur lequel est mis en place le premier, par l'intermédiaire d'un ou plusieurs points de fixation complémentaires 8, disposés sur toutes parties de l'un pour coopérer avec toutes parties correspondantes de l'autre, de manière à rendre détachables l'un des sous-ensembles par rapport à l'autre et permettre l'interchangeabilité à volonté, du second par rapport au premier, selon un choix de l'utilisateur, dans une gamme prédéterminée.

Selon ce premier exemple, les verres 4, 5 constituant le premier sous-ensemble O étant reliés par un pont 9, les points de fixation 8 sont disposés sur le pont et/ou incrustés dans les verres 4, 5.

Selon un autre exemple d'application non représenté, les verres 4, 5 pourront être distincts, incrustés d'un système de fixation et montés séparément sur l'élément de façade 6, par l'intermédiaire de points de fixation complémentaires 8.

Les verres 4, 5 pourraient aussi être munis d'un cerclage. Dans ce cas, les points de fixation 8 pourront être disposés sur lesdits cerclages.

En ce qui concerne l'élément de façade 6, celui-ci pourra également être réalisé en une ou deux parties.

Les branches 2, 3 pourront aussi être amovibles seules grâce aux mêmes moyens de fixation complémentaires 8, selon l'invention.

Selon le second mode de réalisation représenté sur les figures 4, 5, 6, 7, les lunettes 1A sont formées par deux parties distinctes A, B, l'une A par l'ensemble verres optiques 4, 5 - élément de façade 6 - branches 2, 3, ceux-ci étant agencés de manière indissociable, et l'autre B, par un élément de transformation de l'aspect 7, interchangeable par l'intermédiaire d'un ou plusieurs points de fixation complémentaires 8, disposés sur toute partie de l'un pour coopérer avec toute partie correspondante de l'autre, de manière à les rendre détachables l'un par rapport à l'autre et permettre l'interchangeabilité à volonté, du second par rapport au premier, selon un choix de l'utilisateur, dans une gamme prédéterminée.

On assure ainsi un maintien positif dudit élément de transformation 7, selon trois axes X, Y, Z, perpendiculaires entre eux, ou son retrait.

Comme on peut le constater, l'invention se rapporte donc à tout type de lunettes, voire même les combiner entre eux.

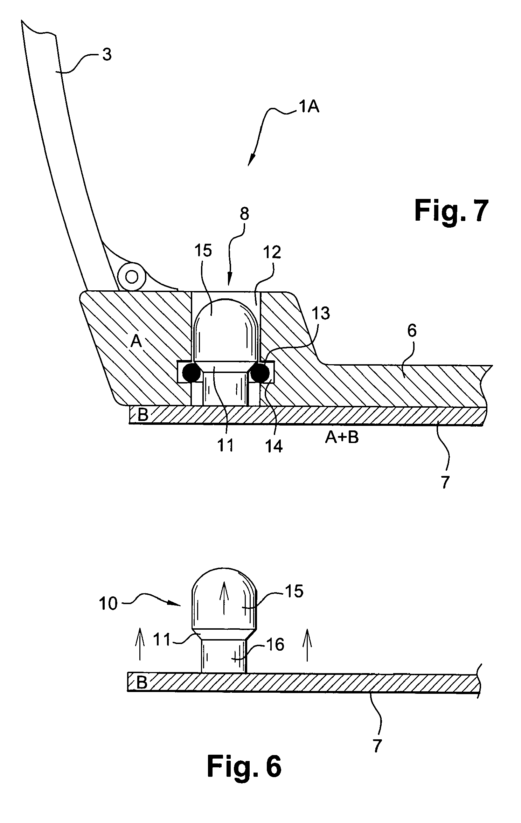

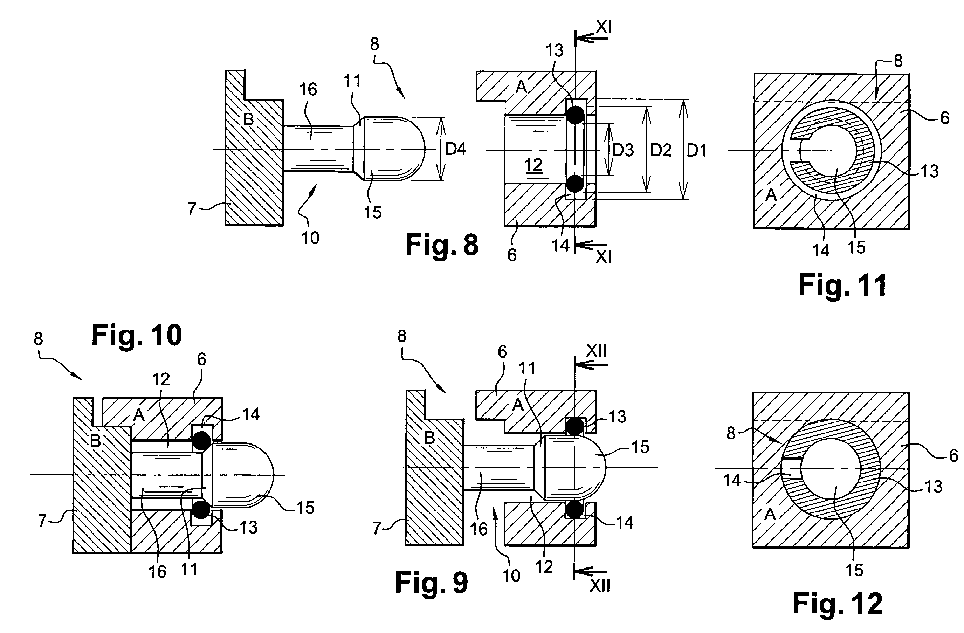

Comme particulièrement bien visible sur les figures 6 à 12, selon l'exemple de réalisation des figures 4, 5, mais pouvant également se rapporter à l'exemple de réalisation des figures 1 à 3, les moyens de fixation complémentaires 8 sont constitués d'une part par un pion 10, comportant des moyens de retenue 11, réalisé perpendiculairement sur l'une des parties B ou T de formes et de dimensions le rendant apte à coopérer avec un logement 12, réalisé sur l'autre partie O ou A, intégrant des moyens de verrouillage 13 dudit pion 10. Ces moyens sont constitués par un organe élastiquement déformable rapporté transversalement dans le logement 12, pour donner à celui-ci une section de passage plus étroite que la section du pion 10, mais déformable élastiquement lors de l'introduction de ce dernier, pour reprendre sa position initiale après introduction et coopérer en verrouillage avec les moyens de retenue 11 dudit pion 10.

Plus précisément, selon un premier exemple, l'organe de verrouillage élastiquement déformable 13 est constitué par un ressort annulaire disposé librement dans une gorge périphérique interne 14, réalisée transversalement dans le logement 12, le diamètre externe D1 en fond de gorge 14 étant supérieur à celui externe D2 du ressort annulaire 13 afin de permettre l'extension libre de celui-ci au passage du pion 10 et de reprendre sa forme initiale ensuite, le diamètre interne D3 dudit ressort étant inférieur à celui externe D4 du pion.

Le ressort annulaire 13, comme le montrent les figures 7 à 12, est un anneau fendu, préférentiellement un tore fendu en métal.

Selon un autre exemple de réalisation non représenté, l'anneau fendu pourrait être un tore en matière plastique.

Il pourrait être aussi constitué par un anneau fermé ou encore un tore en élastomère.

Selon un exemple de réalisation non représenté, l'organe de verrouillage élastiquement déformable est constitué par au moins une tige-ressort disposée librement dans deux logements transversaux réalisés de part et d'autre du logement 12, à proximité de son extrémité supérieure, et disposés de telle sorte que ladite tige-ressort coupe la section de passage du logement 12 afin de devoir s'écarter par déformation élastique au passage du pion 10 et reprendre ensuite sa position initiale, la section de passage du logement 12 étant inférieure à la section du pion 10.

Quelle que soit la solution retenue, l'organe de verrouillage élastiquement déformable peut aussi être logé dans un insert à rapporter dans des logements de la partie de lunettes destinée à le recevoir.

Plus particulièrement, en ce qui concerne le pion 10, celui-ci comporte à son extrémité libre un bourrelet 15 de diamètre D4 plus grand que son corps 16, afin de provoquer l'écartement de l'organe de verrouillage 13 déformable élastiquement, par action directe, et coopérer ensuite en retenue avec lui.

## Revendications

1. Lunettes (1, 1A) constituées par deux branches latérales (2, 3), deux verres optiques (4, 5) à assembler entre eux et un élément de façade (6) de liaison, susceptible de recevoir optionnellement un élément (7) de transformation de l'aspect, au moins deux parties constitutives (O, T ou A, B) desdites lunettes (1, 1A), transformables ou non, comportant des moyens de fixation amovibles complémentaires (8) disposées d'une part sur l'une des parties (O ou A) et d'autre part sur l'autre partie (T ou B) des lunettes (1, 1A), **caractérisées en ce que** les moyens de fixation complémentaires (8) sont constitués d'une part par un pion (10), comportant des moyens de retenue (11), réalisé perpendiculairement sur l'une des parties (B ou T) de formes et de dimensions le rendant apte à coopérer avec un logement (12), réalisé sur l'autre partie (O ou A), ou inversement, intégrant des moyens de verrouillage (13) dudit pion (10), qui sont constitués par un organe élastiquement déformable rapporté transversalement dans le logement (12), pour donner à celui-ci une section de passage plus étroite que la section du pion (10), mais déformable élastiquement lors de l'introduction de ce dernier, pour reprendre sa position initiale après introduction et coopérer en verrouillage avec les moyens de retenue (11) dudit pion (10).

2. Lunettes selon la revendication 1, **caractérisées en ce que** l'organe de verrouillage élastiquement déformable (13) est constitué par un ressort annulaire disposé librement dans une gorge périphérique interne (14), réalisée transversalement dans le logement (12), le diamètre externe (D1) en fond de gorge (14) étant supérieur à celui externe (D2) du ressort annulaire (13) afin de permettre l'extension libre de celui-ci au passage du pion (10) et de reprendre sa forme initiale ensuite, le diamètre interne (D3) dudit ressort étant inférieur à celui externe (D4) du pion.

3. Lunettes selon la revendication 2, **caractérisées en ce que** le ressort annulaire (13) est constitué par un anneau fendu.

4. Lunettes selon la revendication 3, **caractérisées en ce que** l'anneau fendu (13) est un tore en métal.

5. Lunettes selon la revendication 3, **caractérisées en ce que** l'anneau fendu (13) est un tore en matière plastique.

6. Lunettes selon la revendication 2, **caractérisées en ce que** le ressort annulaire est constitué par un anneau fermé.

7. Lunettes selon la revendication 6, **caractérisée en ce que** l'anneau fermé est un tore en élastomère.

8. Lunettes selon la revendication 1, **caractérisées en ce que** l'organe de verrouillage élastiquement déformable est constitué par au moins une tige-ressort disposée librement dans deux logements transversaux réalisés de part et d'autre du logement (12), à proximité de son extrémité supérieure, et disposés de telle sorte que ladite tige-ressort coupe la section de passage du logement (12) afin de devoir s'écarter par déformation élastique au passage du pion (10) et reprendre ensuite sa position initiale, la section de passage du logement (12) étant inférieure à la section du pion (10).

9. Lunettes selon l'une des revendications 1 à 8, **caractérisées en ce que** le pion (10) comporte à son extrémité libre un bourrelet (15) de diamètre (D4) plus grand que son corps (16), afin de provoquer l'écartement de l'organe de verrouillage (13) déformable élastiquement, par action directe, et coopérer ensuite en retenue avec lui.

10. Lunettes selon l'une des revendications 1 à 9, **caractérisées en ce qu'**elles sont formées par deux parties distinctes, l'une (O) dite « optique » comprenant les verres (4, 5) et constituant un premier sous-ensemble, l'autre (T) dite « technique » comprenant au moins un élément de façade (6) constituant avec les branches (2, 3) un second sous-ensemble, sur lequel est mis en place le premier, par l'intermédiaire d'un ou plusieurs points de fixation complémentaires (8), disposés sur toute partie de l'un pour coopérer avec toute partie correspondante de l'autre, de manière à les rendre détachables l'un par rapport à l'autre et permettre l'interchangeabilité à volonté, du second par rapport au premier, selon un choix de l'utilisateur, dans une gamme prédéterminée.

11. Lunettes selon la revendication 10, **caractérisées en ce que** les verres (4, 5) constituant le premier sous-ensemble (O) étant reliés par un pont (9), les points de fixation (8) sont disposés sur le pont et/ou incrustés dans les verres (4, 5).

12. Lunettes selon l'une des revendications 1 à 9, **caractérisées en ce qu'**elles sont formées par deux parties distinctes (A, B), l'une (A) par l'ensemble verres optiques (4, 5) - élément de façade (6) - branches (2, 3), ceux-ci étant agencés de manière indissociable, et l'autre (B), par un élément de transformation de l'aspect (7), interchangeable par l'intermédiaire d'un ou plusieurs points de fixation complémentaires (8), disposés sur toute partie de l'un pour coopérer avec toute partie correspondante de l'autre, de manière à les rendre détachables l'un par rapport à l'autre et permettre l'interchangeabilité à volonté, du second par rapport au premier, selon un choix de l'utilisateur, dans une gamme prédéterminée.
